(19) **Europäisches Patentamt / European Patent Office / Office européen des brevets**

(11) **EP 3 760 348 A1**

(12) **EUROPEAN PATENT APPLICATION**
published in accordance with Art. 153(4) EPC

(43) Date of publication:
**06.01.2021 Bulletin 2021/01**

(21) Application number: **19788739.1**

(22) Date of filing: **17.04.2019**

(51) Int Cl.:
**B22F 3/16** *(2006.01)*      **B22F 3/105** *(2006.01)*

(86) International application number:
**PCT/JP2019/016481**

(87) International publication number:
**WO 2019/203275 (24.10.2019 Gazette 2019/43)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **20.04.2018 JP 2018081241**

(71) Applicant: **Taiyo Nippon Sanso Corporation Tokyo 142-8558 (JP)**

(72) Inventors:
- YAMAGUCHI Yusuke
  Tokyo 142-8558 (JP)
- SATO Toyoyuki
  Tokyo 142-8558 (JP)
- SASAKI Tomoaki
  Tokyo 142-8558 (JP)
- AMANO Hiroki
  Tokyo 142-8558 (JP)

(74) Representative: **HGF**
**1 City Walk**
**Leeds LS11 9DX (GB)**

(54) **METHOD FOR MANUFACTURING METAL MODELED OBJECT**

(57)      An object of the present invention is to provide a method for manufacturing a metal printed object, which can reduce the manufacturing time by a simple method without requiring a large-scale modification of the manufacturing apparatus, and the present invention provides a method for manufacturing a metal printed object in which, in the presence of a shielding gas supplied around a metal powder on a base plate, heat is supplied to the metal powder using energy rays to print a metal layer on the base plate, and the metal layer is subsequentially laminated, wherein when modeling a first metal layer in contact with the base plate, mass per unit volume of the shield gas at a temperature of 25°C and a pressure of 0.1 MPa is in a range of $1.00 \times 10^{-4}$ g/cm$^3$ to $1.3 \times 10^{-3}$ g/cm$^3$.

**Description**

TECHNICAL FIELD

The present invention relates to a method for manufacturing a metal printed object.

BACKGROUND ART

An additive manufacturing technology called "Additive Manufacturing" is known. Additive manufacturing technology has attracted attention as a promising technology in advanced technology fields such as the aircraft industry and medical care because a three-dimensional structure having an arbitrary shape can be manufactured with an arbitrary material.

A metal 3D printer is known as an example of an apparatus that uses an additive manufacturing technique. A metal 3D printer can manufacture a metal printed object by laminating metal layers obtained by heating metal powder with energy rays such as a laser (Patent Document 1).

PRIOR ART DOCUMENTS

PATENT DOCUMENTS

Patent Document 1 Japanese Unexamined Patent Application, First Publication No. 2017-170454

SUMMARY OF INVENTION

PROBLEM TO BE SOLVED BY THE INVENTION

It takes a lot of time to manufacture a large-sized metal printed object in a metal 3D printer. This is because the thickness of one layer of the metal layer formed by laser irradiation is as thin as 10 $\mu$m to 100 $\mu$m, and when the size of the metal printed object is large, the number of laminations is very large.

In the metal 3D printer, the output value of the laser may be set to be relatively low because the mechanical strength of the metal printed object may decrease due to heat storage in the metal printed object during the manufacturing process. If there is a limit on the upper limit of the laser energy, it is difficult to maintain the interlayer bond strength between the metal layers when the scanning speed of the laser is increased to reduce the manufacturing time.

Therefore, Patent Document 1 discloses a laser processing apparatus for the purpose of improving energy efficiency in processing a metal powder. When the energy efficiency is improved when processing metal powders, it is possible to shorten the time required to print one metal layer, and shorten the overall manufacturing time of a metal printed object.

However, the laser processing apparatus disclosed in Patent Document 1 has a plurality of laser light sources as essential components. Therefore, a large-scale modification of the processing apparatus is required to provide a plurality of laser light sources. Moreover, controlling a plurality of laser light sources in one manufacturing process is not simple.

An object of the present invention is to provide a method for manufacturing a metal printed object, which can reduce the manufacturing time by a simple method without requiring a large-scale modification of the manufacturing apparatus.

MEANS FOR SOLVING THE PROBLEM

In order to solve the above problems, the present invention provides the following methods for manufacturing a metal printed object.

[1] A method for manufacturing a metal printed object in which, in the presence of a shielding gas supplied around a metal powder on a base plate, heat is supplied to the metal powder using energy rays to print a metal layer on the base plate, and the metal layer is subsequentially laminated,
wherein when modeling a first metal layer in contact with the base plate, mass per unit volume of the shield gas at a temperature of 25°C and a pressure of 0.1 MPa is in a range of $1.00 \times 10^{-4}$ g/cm$^3$ to $1.3 \times 10^{-3}$g/cm$^3$.
[2] The method for manufacturing a metal printed object according to [1],
wherein the shielding gas contains 20% by volume or more of helium with respect to 100% by volume of the shielding gas.

[3] The method for manufacturing a metal printed object according to [1] or [2], wherein after modeling the first metal layer, when sequentially laminating the metal layers from the surface of the first metal layer, the mass per unit volume of the shield gas at a temperature of 25°C and a pressure of 0.1 MPa is the same as the mass per unit volume of the shield gas at a temperature of 25°C and a pressure of 0.1 MPa when the first metal layer is formed.

[4] The method for manufacturing a metal printed object according to [1] or [2], wherein after printing the first metal layer, as the metal layers are sequentially laminated from the surface of the first metal layer, the mass per unit volume of the shield gas at a temperature of 25°C and a pressure of 0.1 MPa is increased stepwise from the mass per unit volume of the shield gas at a temperature of 25°C and a pressure of 0.1 MPa when the first metal layer is formed.

[5] The method for manufacturing a metal printed object according to [1] or [2], wherein after printing the first metal layer, as the metal layers are sequentially laminated from the surface of the first metal layer, the mass per unit volume of the shield gas at a temperature of 25°C and a pressure of 0.1 MPa is appropriately changed from the mass per unit volume of the shield gas at a temperature of 25°C and a pressure of 0.1 MPa when the first metal layer is formed.

[6] The method for manufacturing a metal printed object according to any one of [1] to [5], wherein an output value of the energy rays is in a range of 100 W to 1500 W.

[7] The method for manufacturing a metal printed object according to any one of [1] to [6], wherein a scanning speed of the energy rays is in a range of 600 mm/s to 3000 mm/s.

[8] The method for manufacturing a metal printed object according to any one of [1] to [7], wherein a scanning width of the energy rays is in a range of 0.01 mm to 0.20 mm.

[9] The method for manufacturing a metal printed object according to any one of [1] to [8], wherein a composition of the shield gas is selected according to the metal powder.

EFFECTS OF THE INVENTION

According to the method for manufacturing a metal printed object of the present invention, the manufacturing time can be shortened by a simple method without requiring a major modification of the manufacturing apparatus.

BRIEF DESCRIPTION OF DRAWINGS

FIG. 1 is a schematic diagram showing a configuration of a metal printed object manufacturing apparatus to which a method for manufacturing a metal printed object according to an embodiment can be applied.
FIG. 2 is a schematic diagram explaining a configuration of an inside of a chamber when the metal printed object manufacturing apparatus in FIG. 1 performs n-th laser irradiation.
FIG. 3 is a graph showing a comparison of average penetration depths in Example 1, and Comparative Examples 1, 6, 11, and 16.
FIG. 4 is a diagram showing a relationship between a scanning speed of the laser and average penetration depth in Examples 1 to 5 and Comparative Examples 1 to 20.

DETAILED DESCRIPTION OF THE PREFERRED EMBODIMENTS

In the present description, the term "mass per unit volume [g/cm$^3$]" of gas is a value which is measured under the conditions of a temperature of 25°C and a pressure of 0.1 MPa using a gas density meter (manufactured by Yokogawa Electric Corporation).

In the present description, the term "gauge pressure" is a value which is measured using a Bourdon tube pressure gauge at 25°C.

In the present description, "~" indicating a numerical range means a numerical range in which the numerical values on the left and right sides thereof are the lower limit value and the upper limit value, respectively.

Hereinafter, a method for manufacturing a metal printed object according to this embodiment will be described in detail with reference to the drawings. Note that, in the drawings used in the following description, in order to make the features easy to understand, there may be a case in which features are enlarged for convenience, and it is not always the case that the dimensional ratios of the respective components are the same as the actual ones.

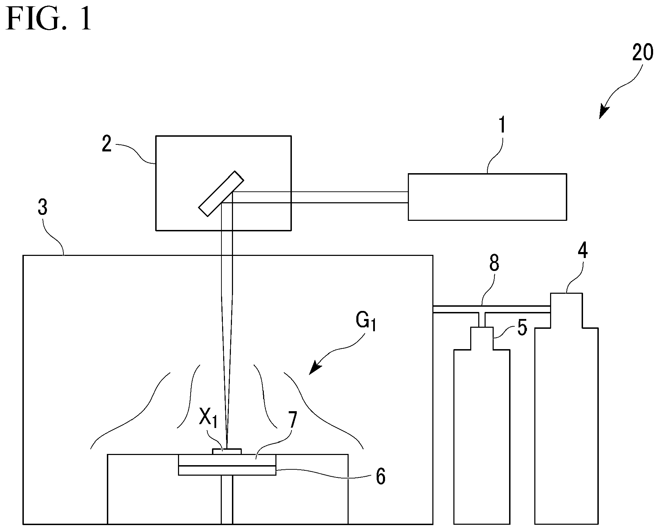

FIG. 1 is a schematic diagram showing a configuration of a metal printed object manufacturing apparatus 20 to which the method for manufacturing a metal printed object of the present embodiment can be applied. As shown in FIG. 1, the metal printed object manufacturing apparatus 20 includes a laser oscillator 1, an optical system 2, a chamber 3, a first shield gas supply source 4, and a second shield gas supply source 5.

The configuration of the metal printed object manufacturing apparatus 20 will be described below.

The laser oscillator 1 is not particularly limited as long as it can irradiate a laser. The laser oscillator 1 irradiates the laser into the chamber 3 via the optical system 2. As a result, the metal printed object manufacturing apparatus 20 can sinter or melt and solidify a metal powder at the position irradiated with the laser. Thereby, a layer (hereinafter referred to as "metal layer") containing a sintered product of the metal powder or a molten solidified product of the metal powder is formed in the chamber 3.

The optical system 2 is not particularly limited as long as the reflection position of the laser emitted from the laser oscillator 1 to the metal powder can be controlled according to the data input in advance. The optical system 2 can be composed of, for example, one or more reflecting mirrors.

The metal printed object manufacturing apparatus 20 can control the laser irradiation position on the metal powder by controlling the optical system 2 according to the data input in advance. Thereby, the metal printed object manufacturing apparatus 20 can print the metal layer into an arbitrary shape.

Examples of the metal powder include powders of various metals such as carbon, boron, magnesium, calcium, chromium, copper, iron, manganese, molybdenum, cobalt, nickel, hafnium, niobium, titanium, aluminum and alloys thereof.

When the metal powder is in the form of particles, the particle size of the metal powder is not particularly limited, but can be, for example, about 10 $\mu$m ~ 200 $\mu$m.

The chamber 3 is a casing in which the operation of irradiating the metal powder with the laser to print the metal layer and laminating the metal layers is repeated. The chamber 3 is not particularly limited as long as the inside thereof can be filled with the shield gas.

The upper side surface of the chamber 3 is connected to the pipeline 8. The shield gas is introduced into the chamber 3 from the first shield gas supply source 4 and the second shield gas supply source 5 via the pipeline 8.

The shield gas is a gas supplied around the metal powder in the chamber 3. A control device (not shown) is provided in the pipeline 8. The control device is not particularly limited as long as the composition of the shield gas supplied into the chamber 3 via the pipeline 8 can be changed. Specific examples of the control device include a flow rate controller that controls the flow rate of the shield gas supplied from the first shield gas supply source 4 and the flow rate of the shield gas supplied from the second shield gas supply source 5 to arbitrary values.

The chamber 3 has a modeling stage 6. The modeling stage 6 is a place for repeating the modeling of the metal layer and the lamination of the printed metal layer. A base plate 7 is placed on the upper surface of the modeling stage 6.

The base plate 7 is a plate for mounting the metal printed object. The metal powder is spread on the base plate 7.

The base plate 7 contacts the metal layer that constitutes the bottom layer of the metal printed object. The metal layer forming the bottom layer of the metal printed object is a metal layer formed by the laser that is first irradiated when manufacturing a metal printed object.

A method for manufacturing a metal printed object according to the present embodiment will be specifically described by using the metal printed object manufacturing apparatus 20 having the configuration above with reference to FIG. 1.

In the method for manufacturing a metal printed object of the present embodiment, heat is supplied to the metal powder using energy rays in the presence of the shielding gas, the metal layer is printed, and the metal layer is laminated on the base plate 7.

First, before printing the metal layer, a shield gas $G_1$ is supplied from the first shield gas supply source 4 into the chamber 3. This makes it possible to fill the chamber 3 with the shield gas $G_1$.

However, in the method for manufacturing a metal printed object of the present embodiment, it is preferable to purge oxygen remaining in the chamber 3 from the inside of the chamber 3 before supplying the shielding gas $G_1$ into the chamber 3. This improves the mechanical strength of the metal printed object. When purging oxygen, the shield gas $G_1$ may be used as a purge gas, and the purging method is not particularly limited.

Specifically, purging is preferably performed until the content of oxygen in the chamber 3 becomes 5% by volume or less. When the content of oxygen in the chamber 3 is 5% by volume or less, the metal powder is less likely to be oxidized and the mechanical strength of the metal printed object is further improved.

In the method for manufacturing a metal printed object of the present embodiment, the shield gas $G_1$ preferably contains at least one selected from the group consisting of hydrogen, helium, nitrogen, neon, argon and xenon. The shield gas more preferably contains at least one selected from the group consisting of hydrogen, helium, nitrogen and neon, more preferably contains one or both of hydrogen and helium, and most preferably contains helium. The shield gas $G_1$ may contain one kind of these gas components alone, or may contain two or more kinds in combination. Most preferably, the shield gas contains $G_1$ helium alone.

In the method for manufacturing a metal printed object of the present embodiment, the metal powder on the base plate 7 is irradiated with a laser to supply heat. As a result, a first metal layer $X_1$, which is a metal layer in contact with the base plate 7, is printed. Thus, the first metal layer $X_1$ is printed by the laser that is first irradiated when manufacturing a metal printed object. That is, the first metal layer $X_1$ is a metal layer forming the bottom layer of the metal printed object.

In the method for manufacturing a metal printed object of the present embodiment, the mass per unit volume of the shielding gas $G_1$ when printing the first metal layer $X_1$ is adjusted in a range of $1.00 \times 10^{-4}$ g/cm$^3$ to $1.3 \times 10^{-3}$g/cm$^3$. When the mass per unit volume of the shield gas $G_1$ is $1.00 \times 10^{-4}$ g/cm$^3$ or more, it becomes difficult for holes and the like to be formed in the metal printed object during manufacturing. When the mass per unit volume of the shield gas $G_1$ is $1.3 \times 10^{-3}$g/cm$^3$ or less, the penetration depth can be increased when forming the first metal layer $X_1$. That is, since the melting degree of the metal powder can be increased, the scanning speed of the laser can be maintained high and the manufacturing time of the metal printed object can be shortened.

When modeling the first metal layer $X_1$, it is preferable to maintain the mass per unit volume of the shield gas $G_1$ at $1.00 \times 10^{-4}$ g/cm$^3$. Depending on the printing conditions, a higher value may be maintained in the range of $1.00 \times 10^{-4}$ g/cm$^3$ to $1.3 \times 10^{-3}$ g/cm$^3$.

In the method for manufacturing a metal printed object of the present embodiment, the shield gas $G_1$ preferably contains helium. When the shield gas $G_1$ contains helium, it becomes easy to control the mass per unit volume of the shield gas $G_1$ in the range above.

When the shield gas $G_1$ contains helium, the content of helium in the shield gas $G_1$ is preferably 20% by volume or more, more preferably 50% by volume or more, and most preferably 80% by volume or more, with respect to 100% by volume of the shield gas $G_1$. When the content of helium in the shield gas $G_1$ is 20% by volume or more with respect to 100% by volume of the shield gas $G_1$, the penetration depth can be increased, that is, the melting degree of the metal powder can be increased, and the manufacturing time can be further shortened. The upper limit of the content of helium is not particularly limited, but is preferably 100% by volume or less.

In the method for manufacturing a metal printed object of the present embodiment, the shield gas $G_1$ may contain oxygen. However, even when the shielding gas $G_1$ contains oxygen, the content of oxygen in the shielding gas is preferably 5% by volume or less, and ideally 0% by volume (that is, less than the detection limit value) with respect to 100% by volume of the shielding gas $G_1$. When the content of oxygen in the shielding gas $G_1$ is 5% by volume or less, the mechanical strength of the metal printed object is improved.

When the shield gas G1 contains helium and argon, the content of helium is preferably in a range of 20% by volume to 100% by volume. The content of argon is preferably in a range of 0% by volume to 80% by volume.

When the shield gas G1 contains helium and nitrogen, the content of helium is preferably in a range of 20% by volume to 100% by volume. The content of nitrogen is preferably in a range of 0% by volume to 80% by volume.

When the printing of the first metal layer $X_1$ is completed, the modeling stage 6 moves downward. Next, new metal powder is supplied on the upper side of the first metal layer $X_1$. By irradiating the newly supplied metal powder on the first metal layer $X_1$ with the laser again, a new metal layer is printed into an arbitrary shape, and the new metal layer is laminated on the upper surface of the metal layer which has already been printed. By repeating the laser irradiation, the downward movement of the modeling stage 6, the supply of new metal powder, and the lamination of metal layers a number of times in this order, the metal layers having any shapes are sequentially laminated. The metal printed object can be manufactured as a three-dimensional structure.

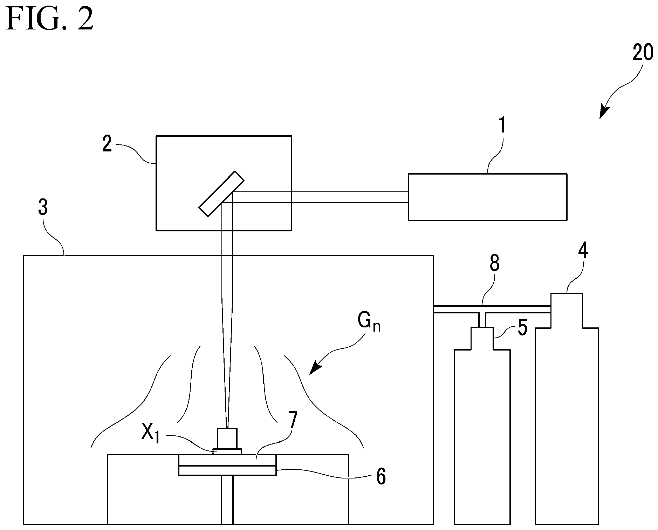

FIG. 2 is a schematic diagram explaining the configuration of an inside of the chamber when the metal printed object manufacturing apparatus performs n-th laser irradiation. However, n is an integer of 2 or more. When performing the n-th laser irradiation, the n-1 metal layers are sequentially laminated on the upper side of the first metal layer $X_1$. The shield gas $G_n$ is supplied around the metal powder on the (n-1)th metal layer from the base plate 7.

In the method for manufacturing a metal printed object according to a first embodiment, after printing the first metal layer $X_1$, as the metal layers are sequentially laminated from the surface of the first metal layer $X_1$, the mass per unit volume of the shield gas $G_n$ is adjusted to the same as the mass per unit volume of the shield gas $G_1$ when the first metal layer is print.

For example, in the method for manufacturing a metal printed object, the number of times of laminating metal layers is relatively small and the size of the metal printed object in the height direction may be small in the initial to middle manufacturing stages. In addition, in the middle to late manufacturing stages, the metal printed object may have a large size in the height direction because it has undergone a certain number of laminations.

The smaller the mass per unit volume of the shield gas $G_n$ (for example, about $1.00 \times 10^{-4}$ g/cm$^3$), the higher the melting degree of the metal powder, and the further the manufacturing time can be shortened. Further, the larger the mass per unit volume of the shield gas $G_n$ (for example, $1.3 \times 10^{-3}$ g/cm$^3$ or more), the less likely voids or the like are formed in the metal printed object during manufacturing.

The number of the cycles in the initial, middle, and later stages in the manufacturing and the total number of the cycles can be appropriately selected depending on factors such as the size of the metal printed object and the material of the metal powder, and are not particularly limited.

In the method for manufacturing a metal printed object according to a second embodiment, after printing the

first metal layer $X_1$, as the metal layers are sequentially laminated from the surface of the first metal layer $X_1$, the mass per unit volume of the shield gas $G_n$ is increased stepwise from the mass per unit volume of the shield gas $G_1$.

For example, in the method for manufacturing a metal printed object, the number of times of laminating metal layers is relatively small and the size of the metal printed object in the height direction may be small in the initial to middle manufacturing stages. In addition, in the middle to late manufacturing stages, the metal printed object may have a large size in the height direction because it has undergone a certain number of laminations. It is preferable to increase the mass per unit volume of the shield gas $G_n$ stepwise in accordance with each stage from the initial stages to the later stages through the middle stages in manufacturing. Even if the mass per unit volume of the shield gas $G_1$ is about $1.00 \times 10^{-4}$ g/cm$^3$, and the melting degree of the metal powder is high, as the number of times of lamination increases, the melting degree of the metal powder may be gradually lowered to reduce the penetration depth, which may lead to a reduction in manufacturing time. As a result, in terms of quality, it becomes difficult for holes and the like to be formed in the metal printed object during manufacturing. In addition, economical gas utilization becomes possible.

The number of the cycles in the initial, middle, and later stages in the manufacturing and the total number of the cycles can be appropriately selected depending on factors such as the size of the metal printed object and the material of the metal powder, and are not particularly limited.

In the second embodiment, a case in which the mass per unit volume of the shield gas $G_n$ is increased stepwise from the mass value per unit volume of the shield gas $G_1$ to $1.3 \times 10^{-3}$ g/cm$^3$ will be described. In this case, the lower limit of the range of the mass per unit volume of the shield gas $G_n$ is the mass per unit volume of the shield gas $G_1$. The upper limit is $1.3 \times 10^{-3}$ g/cm$^3$.

It is preferable that the mass per unit volume of the shield gas $G_n$ at the time of performing the n-th laser irradiation after the metal layer $X_1$ is printed be determined by the following formula (1). As a result, a suitable melting degree is obtained in stages, and it becomes difficult for holes and the like to be formed in the metal printed object during manufacturing. Further, the scanning speed of the laser can be kept high even after the metal layer $X_1$ is printed, and the printing time can be shortened. In addition, economical use of gas becomes possible.

$$(\text{Mass per unit volume of shield gas } G_n) = \{1 - (n/N)\} \times (\text{mass per unit volume of}$$

$$\text{shield gas } G_1) + (n/N) \times (1.3 \times 10^{-3}) \qquad \text{Formula (1)}$$

In the formula (1), N is an integer, which is the number of laser irradiations when the manufacturing of the metal printed object is completed.

In the third embodiment of the method for manufacturing a metal printed object of the present embodiment, after the first metal layer $X_1$ is printed, as the metal layers are subsequentially laminated from the surface of the first metal layer, the mass per unit volume of $G_n$ is appropriately changed from the mass per unit volume of the shield gas $G_1$.

For example, in the method for manufacturing a metal printed object, the number of times of laminating metal layers is relatively small and the size of the metal printed object in the height direction may be small in the initial to middle manufacturing stages. In addition, in the middle to late manufacturing stages, the metal printed object may have a large size in the height direction because it has undergone a certain number of laminations. The mass per unit volume of the shield gas $G_n$ may be changed in accordance with each stage from the initial stages to the later stages through the middle stages in manufacturing.

For example, even if the mass per unit volume of the shield gas $G_1$ is about $1.00 \times 10^{-4}$ g/cm$^3$, and the melting degree of the metal powder is high, the mass per unit volume of the shield gas $G_n$ may be selected in order to obtain the optimum melting degree by gradually lowering or increasing the melting degree of the metal powder as the number of layers is increased. As a result, it is possible to further improve the quality of the metal printed object while considering the reduction of manufacturing time and the economical use of gas. The number of cycles in the initial, middle, and later stages in the manufacturing and the total number of cycles can be appropriately selected depending on factors such as the size of the metal printed object and the material of the metal powder, and are not particularly limited.

In the third embodiment, a case in which the mass per unit volume of the shield gas $G_n$ is appropriately changed in the range of the mass per unit volume of the shield gas $G_1$ to $1.3 \times 10^{-3}$ g/cm$^3$ will be described. In this case, for example, the temperature and humidity in the vicinity of the melting portion of the metal powder irradiated with laser can be used as a reference. If the correlation between the reference and the mass per unit volume of the shield gas $G_n$ that can obtain the melting degree (or the penetration depth) suitable for the reference is obtained in advance and a reference table is created, a controller can automatically select the composition of the shield gas $G_n$. This makes it possible to select the melting degree under appropriate conditions at the laminating stage. Therefore, even if an unexpected environmental change occurs due to the stepwise lamination operation, it becomes difficult for holes and the like to be formed in the metal printed object during the manufacturing process. In addition, even after the metal layer $X_1$ is printed, the scanning speed of the laser can be kept high, the printing time can be shortened, and the gas can be economically used.

For example, when the temperature is used as the reference above, the temperature in the vicinity of the melting portion is measured with an optical sensor or the like, and the mass per unit volume of the shield gas $G_n$ can be changed appropriately so that the melting degree suitable for the measurement temperature can be obtained.

Specifically, in the process of sequentially laminating the metal layers from the surface of the first metal layer $X_1$, it is assumed that the temperature in the vicinity of the melting portion may be relatively high. In this case, the mass per unit volume of the shield gas $G_n$ may be changed larger, but the upper limit is $1.3 \times 10^{-3}$ g/cm$^3$, so that the melting degree of the metal powder becomes relatively low (that is, the penetration depth becomes small). In this way, economical gas utilization may be achieved while maintaining a high scanning speed of the laser and a short printing time.

In addition, regarding the physical property value serving as a reference, the temperature and the humidity in the vicinity of the melting portion are used as an example, but the present invention is not limited to these examples.

In the method for manufacturing a metal printed object of the present embodiment, the mass per unit volume of the shield gas $G_n$ is changed stepwise as the metal layers are sequentially laminated from the surface of the first metal layer $X_1$. This changing method can be performed by a control device (not shown). The mass per unit volume of the shield gas $G_n$ is controlled within the range above by operations such as changing the mixed composition of the shield gas $G_n$ and changing the gas species by the control device.

In the method for manufacturing a metal printed object of the present embodiment, the shield gas $G_n$ preferably contains helium. When the shield gas $G_n$ contains helium, it becomes easy to control the mass per unit volume of the shield gas $G_n$ within the range above.

When the shield gas $G_n$ contains helium, the content of helium in the shield gas $G_n$ is preferably 20% by volume or more, more preferably 50% by volume or more, still more preferably 90% by volume or more, relative to 100% by volume of the shield gas $G_n$. When the shield gas $G_n$ contains 20% by volume or more of helium with respect to 100% by volume of the shield gas $G_n$, the manufacturing time can be further shortened. The upper limit of the content of helium is not particularly limited, but is preferably 100% by volume.

In the method for manufacturing a metal printed object of the present embodiment, the shield gas $G_n$ may contain oxygen. However, even when the shielding gas $G_n$ contains oxygen, the content of oxygen in the shielding gas is preferably 5% by volume or less with respect to 100% by volume of the shielding gas $G_n$, and ideally 0% by volume (that is, less than the detection limit value). When the content of oxygen in the shielding gas $G_n$ is 5% by volume or less, the mechanical strength of the metal printed object is improved.

When the shield gas $G_n$ contains helium and argon, the content of helium is preferably in a range of 20% by volume to 100% by volume, more preferably in a range of 50% by volume to 100% by volume, and most preferably in a range of 90% by volume to 100% by volume, and the content of argon is preferably in a range of 0% by volume to 80% by volume, more preferably in a range of 0% by volume to 50% by volume, and most preferably in a range of 0% by volume to 10% by volume.

When the shield gas $G_n$ contains helium and nitrogen, the content of helium is preferably in a range of 20% by volume to 100% by volume, more preferably in a range of 50% by volume to 100% by volume, and most preferably in a range of 90% by volume to 100% by volume, and the content of nitrogen is preferably in a range of 0% by volume to 80% by volume, more preferably in a range of 0% by volume to 50% by volume, and most preferably in a range of 0% by volume to 10% by volume.

In the method for manufacturing a metal printed object of the present embodiment, it is preferable to select a composition of the shield gas $G_1$ and the shield gas $G_n$ according to the type of the metal powder used.

For example, metals with an austenitic structure such as austenitic stainless steel and nickel alloys have low hydrogen embrittlement susceptibility. When the metal powder contains an austenite structure metal, the metal powder easily oxidizes, which easily deteriorates the corrosion resistance and the like. Therefore, when the metal powder contains an austenitic structure metal such as austenitic stainless steel, and nickel alloys, it is preferable to use a reducing gas such as hydrogen gas as the shield gas from the viewpoint of preventing oxidation.

When the metal powder contains an alloy containing iron as a main component, it is preferable that hydrogen gas not be contained in the shield gas $G_1$ and the shield gas $G_n$ from the viewpoint of preventing hydrogen embrittlement.

When the metal powder contains aluminum, titanium, or an alloy containing these as the main components, it is preferable that the shield gas $G_1$ and the shield gas $G_n$ not contain hydrogen gas from the viewpoint of preventing the formation of blowholes.

In the method for manufacturing a metal printed object of the present embodiment, the output value of the laser is not particularly limited, but may be 100 to 1500 W, for example. When the laser output value is 100 W or more, the interlayer bond strength of the metal layers is further improved. When the output value of the laser is 1500 W or less, the mechanical strength of the metal printed object is improved.

In the method for manufacturing a metal printed object of the present embodiment, the scanning speed of the laser is preferably in a range of 600 mm/s to 3,000 mm/s, more preferably in a range of 800 mm/s to 2500 mm/s, and most preferably in a range of 1,000 mm/s to 2,000 mm/s. In the method for manufacturing a metal printed object of the present embodiment, the interlayer bond strength of the metal layers can be maintained even when the scanning speed of the laser is 600 mm/s or more, and the manufacturing time of the metal printed object can be further shortened. In the method for manufacturing a metal printed object of the present embodiment, when the scanning speed of the laser is 3,000 mm/s or less, the interlayer bond strength of the metal layers is further improved.

In the method for manufacturing a metal printed object of the present embodiment, the scanning width of the laser is preferably in a range of 0.01 mm to 0.20 mm, more preferably in a range of 0.03 mm to 0.18 mm, and most preferably in a range of 0.05 mm to 0.15 mm. If the scanning width of the laser is 0.01 mm or more, the manufacturing time of the metal printed object can be further shortened. When the scanning width of the laser is 0.20 mm or less, it becomes difficult to form holes or the like in the metal printed object during the manufacturing.

The gauge pressure in the chamber 3 is not particularly limited. The gauge pressure may be, for example, in a range of 0 MPa to 0.1 MPa.

(Effects)

In the method for manufacturing a metal printed object according to the present embodiments described above, when the first metal layer $X_1$ that is in contact with the base plate 7 is printed, the mass per unit volume of the shield gas $G_1$ is in the range of $1.00 \times 10^{-4}$ g/cm$^3$ 3 to $1.3 \times 10^{-3}$ g/cm$^3$. As a result, the laser penetration depth into the surface of the molten pool of the metal powder increases. Therefore, when the laser output value is about 100 W to 300 W and a laser having a relatively low energy is used, even if the scanning speed of the laser is increased to about 600 mm/s to 1,600 mm/s, the interlayer bond strength of the metal layers can be maintained.

As described above, according to the method for manufacturing a metal printed object according to the present embodiments, the manufacturing time can be shortened by a simple method without requiring a major modification of the manufacturing apparatus.

The reason why the laser penetration depth into the surface of the molten pool of the metal powder is deep is not clear, but for example, it can be considered as follows.

In the metal printed object manufacturing apparatus 20, it is considered that the metal powder on the surface of the base plate 7 is melted before the base plate 7, and a molten pool of the metal powder is formed on the base plate 7. This is because the metal powder easily reaches the melting point before the thermal energy transmitted to the metal powder diffuses to the base plate 7.

Since the thermal energy transmitted to the base plate 7 is diffused throughout the base plate 7, the temperature is unlikely to rise, and the base plate 7 is unlikely to melt. Therefore, when the molten pool exists on the surface of the base plate 7, a depression is generated in the molten pool, and the laser light is easily concentrated. It is considered that at this time, a deep penetration called a keyhole is formed due to the concentration of the laser light.

It is considered that in the method for manufacturing a metal printed object of the present embodiment, when the first metal layer $X_1$ in contact with the base plate 7 is printed, the mass per unit volume of the shield gas $G_1$ is maintained to $1.3 \times 10^{-3}$ g/cm$^3$ or less, and therefore, the cross-sectional area of the keyhole is reduced. As a result, it is considered that the laser light is likely to concentrate on the keyhole, a narrow and deep keyhole is formed, and the laser penetration depth into the surface of the molten pool increases.

As described above, in the method for manufacturing a metal printed object according to the present embodiment, the laser penetration depth into the surface of the molten pool increases. Therefore, when the laser output value is in the range of about 100 W to about 300 W and a laser having a relatively low energy is used, even if the scanning speed of the laser is increased in the range of about 600 mm/s to 1,600 mm/s, the interlayer bond strength of the metal layers can be maintained. As a result, according to the method for manufacturing a metal printed object according to the present embodiment, the manufacturing time can be shortened by a simple method without requiring a major modification of the manufacturing apparatus.

Further, in the method for manufacturing a metal printed object according to the present embodiment, the mass per unit volume of the shield gas $G_n$ can be changed by changing the composition of the shield gas $G_n$. Therefore, the laser penetration depth into the surface of the molten pool can be controlled. As a result, according to the method for manufacturing a metal printed object of the present embodiment, it is possible to reduce the manufacturing time of the metal printed object and prevent the formation of holes and the like.

Although some embodiments of the present invention have been described above, the present invention is not limited to these particular embodiments. In addition, the present invention may have additions, omissions, substitutions, and other modifications of the configuration within the scope of the gist of the present invention described in the claims.

For example, in the present embodiments described above, the metal printed object manufacturing apparatus has a mode in which the metal powder spread on the upper side of the base plate is irradiated with the laser. However, in another embodiment, the metal printed object manufacturing apparatus may have a mode in which the metal powder is supplied while being sprayed at the laser irradiation position.

Examples

Hereinafter, the present invention will be described specifically with reference to Examples, but the present invention is not limited to the following description.

(Measuring method)

As for the term "average penetration depth [$\mu$m]", a square metal melt described later was cut in the direction perpendicular to the base plate 7 together with the base plate 7 without separating from the base plate 7. The cut metal melt was embedded with a resin, and after polishing with a grindstone or the like, the penetration depth was measured by observing the cross section of the metal melt and the base plate 7. The penetration depth was measured three times as described above, and the average value of the three penetration depths was defined as the average penetration depth [$\mu$m].

The "gauge pressure" was measured under the conditions of 25°C using a Bourdon tube pressure gauge.

(Example 1)

A metal printed object was manufactured with the metal printed object manufacturing apparatus 20. As the laser oscillator 1, a Red Power manufactured by SPI Lasers was used. As the optical system 2, a galvanometer mirror was used. The base plate 6 used was made of pure titanium. As the metal powder, a titanium alloy $Ti_6Al_4V$ (LPW Technology Ltd., $\phi$ 10 $\mu$m ~ 45 $\mu$m) was used. The laser output value was 200 W, the laser scanning width was 0.05 mm, and the scanning speed of the laser was 800 mm/s. A layer of the metal powder having a thickness of 30 $\mu$m was placed on the base plate 6.

In Example 1, 100% by volume of helium gas was supplied as the shield gas into the chamber 3 at a flow rate of 30 L/min. When printing the first metal layer in contact with the base plate 7, the mass per unit volume of the shield gas $G_1$ was maintained at $1.60 \times 10^{-4}$ g/cm$^3$.

Under the conditions above, a 10 mm×10 mm square metal printed object was manufactured. In addition, the 10 mm×10 mm square metal printed object corresponds to one metal layer in a metal printed object, that is, a first metal layer.

(Example 2)

In Example 2, a 10 mm×10 mm square metal printed object was manufactured in the same manner as in Example 1 except that the scanning speed of the laser was 1,200 mm/s.

(Example 3)

In Example 3, a 10 mm×10 mm square metal printed object was manufactured in the same manner as in Example 1 except that the scanning speed of the laser was 1,600 mm/s.

(Example 4)

In Example 4, a 10 mm×10 mm square metal printed object was manufactured in the same manner as in Example 1 except that the scanning speed of the laser was 2,000 mm/s.

(Example 5)

In Example 5, a 10 mm×10 mm square metal printed object was manufactured in the same manner as in Example 1 except that the scanning speed of the laser was 2,500 mm/s.

(Comparative Example 1)

In Comparative Example 1, a 10 mm×10 mm square metal printed object was manufactured in the same manner as in Example 1 except that a mixed gas of 20% by volume of argon gas and 80% by volume of helium gas was used as the shield gas.

In Comparative Example 1, when the first metal layer in contact with the base plate 7 was printed, the mass per unit volume of the shield gas was maintained at $4.48 \times 10^{-4}$ g/cm$^3$.

(Comparative Example 2)

In Comparative Example 2, a 10 mm×10 mm square metal printed object was manufactured in the same manner as in Comparative Example 1 except that the scanning speed of the laser was 1,200 mm/s.

(Comparative Example 3)

In Comparative Example 3, a 10 mm×10 mm square metal printed object was manufactured in the same manner as in Comparative Example 1 except that the scanning speed of the laser was 1,600 mm/s.

(Comparative Example 4)

In Comparative Example 4, a 10 mm×10 mm square metal printed object was manufactured in the same manner as in Comparative Example 1 except that the scanning speed of the laser was 2,000 mm/s.

(Comparative Example 5)

In Comparative Example 5, a 10 mm×10 mm square metal printed object was manufactured in the same manner as in Comparative Example 1 except that the scanning speed of the laser was 2,500 mm/s.

(Comparative Example 6)

In Comparative Example 6, a 10 mm×10 mm square metal printed object was manufactured in the same manner as in Example 1 except that a mixed gas of 50% by volume of argon gas and 50% by volume of helium gas was used as the shield gas.
In Comparative Example 6, when the first metal layer in contact with the base plate 7 was printed, the mass per unit volume of the shield gas was maintained at $8.80\times10^{-4}$ g/cm$^3$.

(Comparative Example 7)

In Comparative Example 7, a 10 mm×10 mm square metal printed object was manufactured in the same manner as in Comparative Example 6 except that the scanning speed of the laser was 1,200 mm/s.

(Comparative Example 8)

In Comparative Example 8, a 10 mm×10 mm square metal printed object was manufactured in the same manner as in Comparative Example 6 except that the scanning speed of the laser was 1.600 mm/s.

(Comparative Example 9)

In Comparative Example 9, a 10 mm×10 mm square metal printed object was manufactured in the same manner as in Comparative Example 6 except that the scanning speed of the laser was 2,000 mm/s.

(Comparative Example 10)

In Comparative Example 10, a 10 mm×10 mm square metal printed object was manufactured in the same manner as in Comparative Example 6 except that the scanning speed of the laser was 2,500 mm/s.

(Comparative Example 11)

In Comparative Example 11, a 10 mm×10 mm square metal printed object was manufactured in the same manner as in Example 1 except that a mixed gas of 80% by volume of argon gas and 20% by volume of helium gas was used as the shield gas.
In Comparative Example 11, when the first metal layer in contact with the base plate 7 was printed, the mass per unit volume of the shield gas was maintained at $1.30\times10^{-4}$ g/cm$^3$.

(Comparative Example 12)

In Comparative Example 12, a 10 mm×10 mm square metal printed object was manufactured in the same manner as in Comparative Example 11 except that the scanning speed of the laser was 1,200 mm/s.

(Comparative Example 13)

In Comparative Example 13, a 10 mm×10 mm square metal printed object was manufactured in the same manner as in Comparative Example 11 except that the scanning speed of the laser was 1,600 mm/s.

(Comparative Example 14)

In Comparative Example 14, a 10 mm×10 mm square metal printed object was manufactured in the same manner as in Comparative Example 11 except that the scanning speed of the laser was 2,000 mm/s.

(Comparative Example 15)

In Comparative Example 15, a 10 mm×10 mm square metal printed object was manufactured in the same manner as in Comparative Example 11 except that the scanning speed of the laser was 2,500 mm/s.

(Comparative Example 16)

In Comparative Example 16, a 10 mm×10 mm square metal printed object was manufactured in the same manner as in Example 1 except that 100% by volume of argon gas was used as the shield gas.
In Comparative Example 16, when the first metal layer in contact with the base plate 7 was printed, the mass per unit volume of the shield gas was maintained at $1.60×10^{-3}$ g/cm$^3$.

(Comparative Example 17)

In Comparative Example 17, a 10 mm×10 mm square metal printed object was manufactured in the same manner as in Comparative Example 16 except that the scanning speed of the laser was 1,200 mm/s.

(Comparative Example 18)

In Comparative Example 18, a 10 mm×10 mm square metal printed object was manufactured in the same manner as in Comparative Example 16 except that the scanning speed of the laser was 1,600 mm/s.

(Comparative Example 19)

In Comparative Example 19, a 10 mm×10 mm square metal printed object was manufactured in the same manner as in Comparative Example 16 except that the scanning speed of the laser was 2,000 mm/s.

(Comparative Example 20)

In Comparative Example 20, a 10 mm×10 mm square metal printed object was manufactured in the same manner as in Comparative Example 16 except that the scanning speed of the laser was 2,500 mm/s.

(Reference Example 1)

In Reference Example 1, the base plate 7 was irradiated with the laser under the same conditions as in Example 1 except that the metal powder layer was not placed on the base plate 7.

(Reference Example 2)

In Reference Example 2, the base plate 7 was irradiated with the laser under the same conditions as in Comparative Example 1 except that the metal powder layer was not placed on the base plate 7.

(Reference Example 3)

In Reference Example 3, the base plate 7 was irradiated with the laser under the same conditions as in Comparative Example 6 except that the metal powder layer was not placed on the base plate 7.

(Reference Example 4)

In Reference Example 4, the base plate 7 was irradiated with the laser under the same conditions as in Comparative Example 11 except that the metal powder layer was not placed on the base plate 7.

(Reference Example 5)

In Reference Example 5, the base plate 7 was irradiated with the laser under the same conditions as in Comparative Example 16 except that the metal powder layer was not placed on the base plate 7.

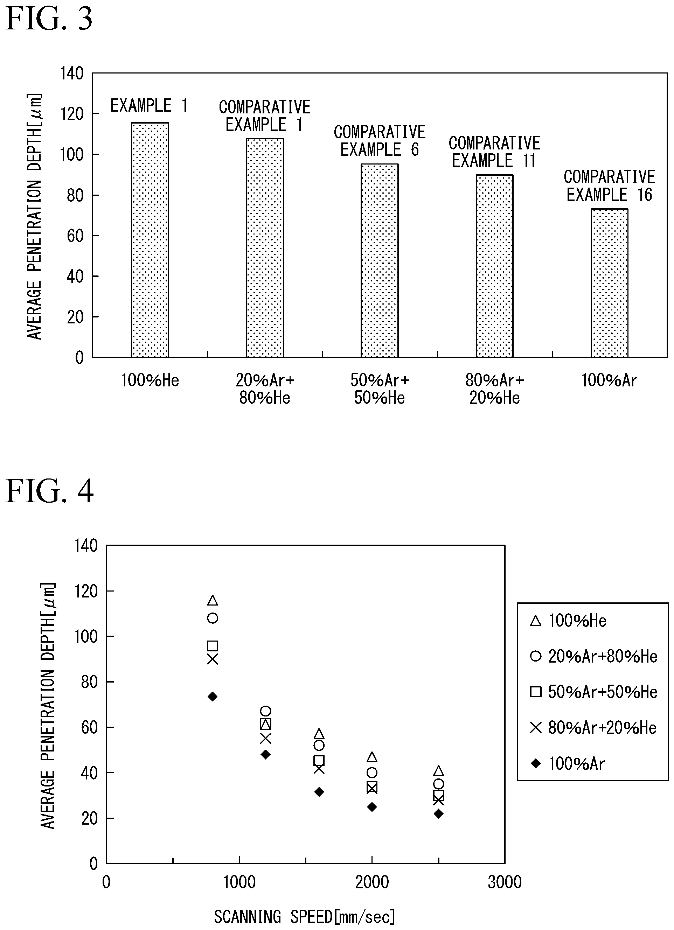

FIG. 3 is a graph showing a comparison of average penetration depths in Example 1, and Comparative Examples 1, 6, 11, and 16.

From the results shown in FIG. 3, it can be confirmed that when the scanning speed of the laser is 800 mm/s, the average penetration depth increases as the mass per unit volume of the shield gas becomes smaller.

FIG. 4 is a graph showing the relationship between the scanning speed of the laser and the average penetration depth in Examples 1 to 5 and Comparative Examples 1 to 20. In FIG. 4, △ indicates the results of Examples 1 to 5, ○ indicates the results of Comparative Examples 1 to 5, □ shows the results of Comparative Examples 6 to 10, x indicates the results of Comparative Examples 11 to 15, and ♦ indicates the results of Comparative Examples 16 to 20.

From the results shown in FIG. 4, even when the scanning speed of the laser was 2,500 mm/s, in Example 5, and Comparative Examples 5, 10, and 15 in which the mass per unit volume of the shield gas was $1.3 \times 10^{-3}$ g/cm$^3$ or less, since the average penetration depth exceeds the average particle diameter of the material metal powder of 27.5 $\mu$m, it was confirmed that these gases are useful as a shield gas.

[Table 1]

| | Example 1 | Comparative Example 1 | Comparative Example 6 | Comparative Example 11 | Comparative Example 16 |
|---|---|---|---|---|---|
| Composition of shield gas | 100% He | 20% Ar + 80% He | 50% Ar + 50% He | 80% Ar + 20% He | 100% Ar |
| Mass per unit volume of shield gas [x 10$^{-3}$ g/cm$^3$] | 0.160 | 0.45 | 0.88 | 1.31 | 1.60 |
| Average penetration depth [$\mu$m] | 116 | 108 | 96 | 90 | 73 |
| | Reference Example 1 | Reference Example 2 | Reference Example 3 | Reference Example 4 | Reference Example 5 |
| Composition of shield gas | 100% He | 20% Ar + 80% He | 50% Ar + 50% He | 80% Ar + 20% He | 100% Ar |
| Mass per unit volume of shield gas [$\times$10$^{-3}$ g/cm$^3$] | 0.160 | 0.45 | 0.88 | 1.30 | 1.60 |
| Average penetration depth [$\mu$m] | - | - | - | - | - |

Table 1 shows the average penetration depths of Example 1, and Comparative Examples 1, 6, 11, and 16, and Reference Examples 1 to 5. In Reference Examples 1 to 5, melting of the base plate 7 did not occur. Therefore, it is considered that a deep penetration called a keyhole was not formed.

From the results shown in Table 1, it can be confirmed that in Reference Examples 1 to 5, no penetration was formed regardless of the mass per unit volume of the shield gas.

On the other hand, in Example 1, Comparative Examples 1, 6, 11, and 16, the formation of the molten pool was confirmed, and the formation of a keyhole is suggested.

The reason why there is a difference in the formation of the keyhole depending on the presence or absence of the metal powder layer on the base plate 7 is considered as follows.

If the metal powder is not on the base plate 7, no molten pool of metal powder is formed. Therefore, the keyhole is formed on the base plate 7 only when the base plate 7 itself is melted by heat conduction to the base plate 7. However, there is a concern that the mechanical strength will decrease due to heat storage in the metal printed object, so in Examples 1 to 5, Comparative Examples 1 to 20 and Reference Examples 1 to 5, the laser output value was set to a relatively low value of 200 W. Under the condition that the output value of the laser is 200 W, the energy density of the laser is low, so that the base plate 7 is not melted and the keyhole is unlikely to be formed.

In this way, it is considered that it is difficult to from a keyhole in the method for manufacturing a metal printed object because the upper limit of the thermal energy of the energy rays is limited.

From the results of the Examples above, it is confirmed that when printing the first metal layer in contact with the base plate 7, the average penetration depth became deeper by setting the mass per unit volume of the shield gas in the range of $1.00 \times 10^{-4}$ g/cm$^3$ to $1.3 \times 10^{-3}$ g/cm$^3$.

When the laser output value is relatively low at 200 W, it is suggested that the interlayer bond strength of the metal layers can be maintained and the manufacturing time can be shortened even if the scanning speed of the laser is increased to about 800 to 2,500 mm/s.

Helium gas used in Examples 1 to 5, Comparative Examples 1 to 15 and Reference Examples 1 to 4 is a gas having a relatively high thermal conductivity. Initially, under the conditions of Examples 1 to 5, Comparative Examples 1 to 15, and Reference Examples 1 to 4, in which the thermal conductivity is relatively high, the inventors of the present invention expected that the cooling effect of the molten pool was likely to be high, and it was difficult to form keyholes. Nevertheless, it is completely unexpected that when printing the first metal layer in contact with the base plate 7, the effect of increasing the average penetration depth can be obtained by adjusting the mass per unit volume of the shield gas in the range of $1.00 \times 10^{-4}$ g/cm$^3$ to $1.3 \times 10^{-3}$ g/cm$^3$.

EXPLANATION OF REFERENCE NUMERALS

1    laser oscillator
2    optical system
3    chamber
4    first shield gas supply source
5    second shield gas supply source
6    printing stage
7    base plate
8    pipeline
20   metal printed object manufacturing apparatus
$G_1$   shield gas used when irradiating laser for the first time
$G_1$   shield gas used when irradiating laser for n-th time
$X_1$   first metal layer

**Claims**

1. A method for manufacturing a metal printed object in which, in the presence of a shielding gas supplied around a metal powder on a base plate, heat is supplied to the metal powder using energy rays to print a metal layer on the base plate, and the metal layer is subsequently laminated,
   wherein when modeling a first metal layer in contact with the base plate, mass per unit volume of the shield gas at a temperature of 25°C and a pressure of 0.1 MPa is in a range of $1.00 \times 10^{-4}$ g/cm$^3$ to $1.3 \times 10^{-3}$ g/cm$^3$.

2. The method for manufacturing a metal printed object according to Claim 1,
   wherein the shielding gas contains 20% by volume or more of helium with respect to 100% by volume of the shielding gas.

3. The method for manufacturing a metal printed object according to Claim 1 or 2,
   wherein after modeling the first metal layer, when sequentially laminating the metal layers from the surface of the first metal layer, the mass per unit volume of the shield gas at a temperature of 25°C and a pressure of 0.1 MPa is the same as the mass per unit volume of the shield gas at a temperature of 25°C and a pressure of 0.1 MPa when the first metal layer is formed.

**4.** The method for manufacturing a metal printed object according to Claim 1 or 2,
wherein after printing the first metal layer, as the metal layers are sequentially laminated from the surface of the first metal layer, the mass per unit volume of the shield gas at a temperature of 25°C and a pressure of 0.1 MPa is increased stepwise from the mass per unit volume of the shield gas at a temperature of 25°C and a pressure of 0.1 MPa when the first metal layer is formed.

**5.** The method for manufacturing a metal printed object according to Claim 1 or 2,
wherein after printing the first metal layer, as the metal layers are sequentially laminated from the surface of the first metal layer, the mass per unit volume of the shield gas at a temperature of 25°C and a pressure of 0.1 MPa is appropriately changed from the mass per unit volume of the shield gas at a temperature of 25°C and a pressure of 0.1 MPa when the first metal layer is formed.

**6.** The method for manufacturing a metal printed object according to any one of Claims 1 to 5,
wherein an output value of the energy rays is in a range of 100 W to 1,500 W.

**7.** The method for manufacturing a metal printed object according to any one of Claims 1 to 6,
wherein a scanning speed of the energy rays is in a range of 600 mm/s to 3,000 mm/s.

**8.** The method for manufacturing a metal printed object according to any one of Claims 1 to 7,
wherein a scanning width of the energy rays is in a range of 0.01 mm to 0.20 mm.

**9.** The method for manufacturing a metal printed object according to any one of Claims 1 to 8,
wherein a composition of the shield gas is selected according to the metal powder.

## FIG. 1

# FIG. 2

## FIG. 3

## FIG. 4

## INTERNATIONAL SEARCH REPORT

International application No.

PCT/JP2019/016481

### A. CLASSIFICATION OF SUBJECT MATTER
Int.Cl. B22F3/16(2006.01)i, B22F3/105(2006.01)i

According to International Patent Classification (IPC) or to both national classification and IPC

### B. FIELDS SEARCHED

Minimum documentation searched (classification system followed by classification symbols)
Int.Cl. B22F3/16, B22F3/105

Documentation searched other than minimum documentation to the extent that such documents are included in the fields searched
| | |
|---|---|
| Published examined utility model applications of Japan | 1922-1996 |
| Published unexamined utility model applications of Japan | 1971-2019 |
| Registered utility model specifications of Japan | 1996-2019 |
| Published registered utility model applications of Japan | 1994-2019 |

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| X | US 2017/0165781 A1 (LINDE AKTIENGESELLSCHAFT) 15 June 2017, claims, paragraphs [0023]-[0043] & GB 201320888 D0 & WO 2015/079200 A2 & EP 3074169 A2 & CN 105829013 A | 1-9 |
| X | WO 2017/081813 A1 (TECHNOLOGY RESEARCH ASSOCIATION FOR FUTURE ADDITIVE MANUFACTURING) 18 May 2011, claims, paragraphs [0015]-[0029] & EP 3187327 A1, claims, paragraphs [0015]-[0029] & US 2017/0259337 A1 & JP 6019268 B1 | 1-9 |

☒ Further documents are listed in the continuation of Box C.    ☐ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 05.07.2019 | 23.07.2019 |

| Name and mailing address of the ISA/ | Authorized officer |
|---|---|
| Japan Patent Office 3-4-3, Kasumigaseki, Chiyoda-ku, Tokyo 100-8915, Japan | |
| | Telephone No. |

Form PCT/ISA/210 (second sheet) (January 2015)

**INTERNATIONAL SEARCH REPORT**

| International application No. |
| --- |
| PCT/JP2019/016481 |

C (Continuation).    DOCUMENTS CONSIDERED TO BE RELEVANT

| Category* | Citation of document, with indication, where appropriate, of the relevant passages | Relevant to claim No. |
| --- | --- | --- |
| A | JP 2012-224919 A (PANASONIC CORPORATION) 15 November 2012, paragraphs [0027]-[0045] (Family: none) | 1-9 |
| A | JP 2017-137568 A (GENERAL ELECTRIC COMPANY) 10 August 2017, paragraph [0019] & US 2017/0182598 A1, paragraph [0018] & US 2017/0182594 A1 & EP 3187286 A1 & KR 10-2017-0077808 A | 1-9 |
| A | JP 2017-7253 A (TOYOTA MOTOR CORPORATION) 12 January 2017, paragraph [0057] (Family: none) | 1-9 |

Form PCT/ISA/210 (continuation of second sheet) (January 2015)

**EP 3 760 348 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2017170454 A